# EUROPEAN PATENT APPLICATION

(11) **EP 0 710 858 A1**
(43) Date of publication of application: **08.05.1996**
(21) Application number: 95307832.6
(22) Date of filing: 02.11.1995
(51) Int. Cl.: G02B 6/245, H02G 1/12

(54) **Removing coating from optical fibres**

(30) Priority: 07.11.1994 GB 19940022412
(71) Applicant: YORK TECHNOLOGY LIMITED, Chandler's Ford Hampshire S053 4DG (GB)
(72) Inventor: Hardman, Stephen J., Chandlers Ford, Hampshire SO5 1GX (GB); Apperley, Anthony, Gosport, Hampshire PO12 2BQ (GB)
(74) Representative: Fenlon, Christine Lesley, et al

(57) **Abstract**

A device for removing coating (13, 14) from optical fibres comprises a pair of housing members (18a, 18b) incorporating heater elements (21 a, 21 b) and each housing member has a surface (19a, 19b) provided with a coating removal blade (20a, 20b). The coating removal blades are actively or passively heated to provide better cutting, are manufactured in one piece (20) to provide automatic blade alignment and easy replacement in the field, and are provided with a region (35) for collection of the removed coating debris. An external alignment device (32) provides automatic alignment between the coated fibre ribbon and the profile of the coating removal blade, if this is serrated. Such a device can align, heat and cut through an end portion of a coated optical fibre, giving easy separation of the split coating layers and consequently excellent performance when removing the coating layers of a coated optical fibre.

## Description

The present invention relates to removing coating from optical fibres and in particular to a device for use in removing coating from a coated optical fibre, in preparation for connection of that optical fibre with another optical fibre or equipment.

In this specification, "optical fibre" should be taken to mean either a fibre having a single core surrounded by one or more coating layers or multicore ribbon-type fibre comprising a plurality of coated single core fibres laid side by side and surrounded by a further coating so as to form a ribbon, and "core" to mean the whole of the glass structure of the fibre. An optical fibre may be connected to another optical fibre and/or with equipment by means of an optical connector. A so-called "fusion connection" that utilises electrical discharge to produce a plasma that heats the fibres and a so-called "mechanical connection" that linearly aligns the optical fibre or fibres are also widely used for interconnection of optical fibres.

By whatever means the optical fibre is to be connected, the coating should be removed from an end of the fibre, so as to expose the optical fibre core or cores in that region.

Typically, this is achieved by employing a cutter having a pair of cutting edges which are arranged transverse to the axis of the fibre and moved so that they cut into the coating. At or around the region where it is cut by the edges, the coating layer comes to have a crack or indentation and consequently the coating layer of the end area can be removed from the optical fibre by subjecting the coated optical fibre and/or the cutter to a tensile force, applied in an axial direction, thereby separating the coating layer and the optical fibre.

If the coating layer of a coated optical fibre is relatively loosely fitted to the optical fibre, an end portion of the coated layer can be easily and neatly separated from the optical fibre by simply cutting the coating layer. The cutting edges should be separated by an appropriate distance, so that no damage occurs to the core of the fibre through contact of the cutter edges therewith.

If, however, the coating layer of a coated optical fibre is firmly fitted to that fibre, in addition to a cutter that physically breaks the coating layer a heater may used to heat and soften the coating layer, since softening of the coating reduces its adherence to the core. As the coating layer is softened by heat, it can be separated from the core of the fibre with relative ease.

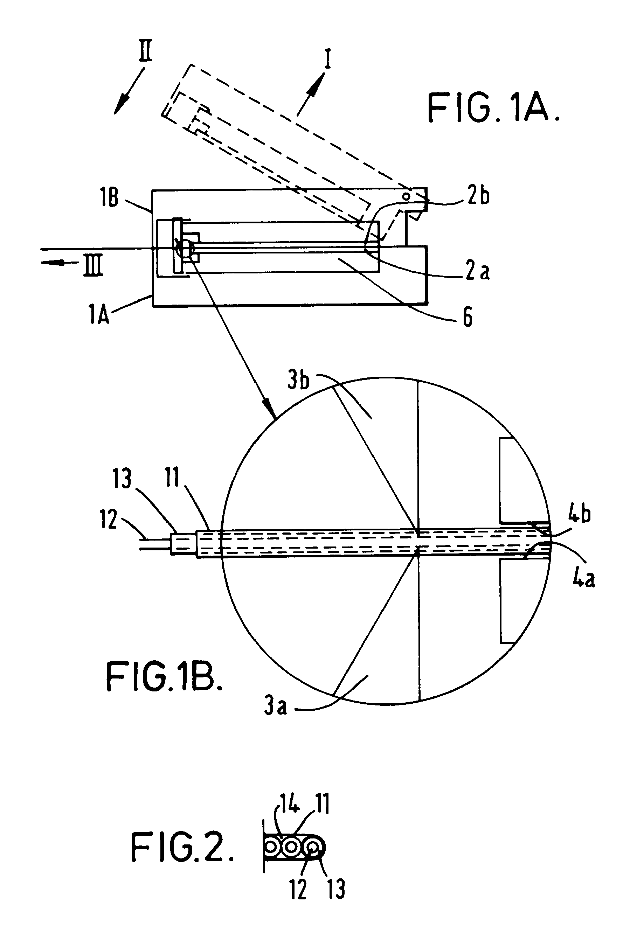

Figs. 1 (A) and 1 (B) of the accompanying drawings illustrate a previously-considered coating remover having a cutter of the type described above.

The coating remover of Figs. 1 (A) and 1 (B) comprises a pair of clamp members 1 a, 1 b having matching surfaces 2a, 2b respectively provided with cutting edges 3a, 3b and, spaced therefrom, coating holding members 4a, 4b. The clamp members 1 a, 1b are connected with each other by means of a hinge 5, so that the pair of cutting edges 3a, 3b, as well as the pair of coating holding members 4a, 4b, are rotatable relative to one another. A heater 6 is embedded in the clamp member 1 a.

A coated optical fibre 11 is shown in Fig. 1(B) and comprises a quartz type optical fibre core 12 and plastic coating layers 13, 14 which are formed around the outer periphery of the optical fibre core 12.

The coating layers 13 and 14 constitute an internal coating layer and an external coating layer of the optical fibre core 12 respectively when the fibre 11 is a single core coated optical fibre, as shown in Fig. 1(B). If the optical fibre 11 is a multifibre as illustrated in Fig. 2 of the accompanying drawings, the coating layer 13 represents a coating layer for each single optical fibre core and the coating layer 14 represents a coating layer for all of the optical fibres in the multifibre.

Referring to Figs. 1(A) and 1(B) again, to remove the coating layers 13, 14 at an end area of the optical fibre 11, the clamp member 1b is rotationally moved in the direction as indicated by arrow I, in order to separate the pair of cutting edges 3a and 3b from each other as well as separating the coating holding members 4a and 4b. The coated optical fibre 11 is placed on the cutting edge 3a and the coating holding member 4a and the clamp member 1b is then moved back, in the direction as indicated by the arrow II, to close together the pair of cutting edges 3a and 3b as well as the coating holding members 4a and 4b. At the same time the end area of the coating layers 13 and 14 is heated by the heater 6.

The coating layers 13, 14 at the end area of the coated optical fibre 11 clamped by the pair of coating holding members 4a and 4b are cut by the pair of cutting edges 3a, 3b as those edges close together. If the coated optical fibre 11 is then pulled in the direction as indicated by arrow III under this condition, the coating layers 13, 14 will split along the cutting lines of the cutting edges 3a, 3b and the optical fibre core(s) 12 may be pulled away from the portion of the coating layers separated and retained by the coating holding members 4a, 4b of the respective clamp members 1 a, 1 b.

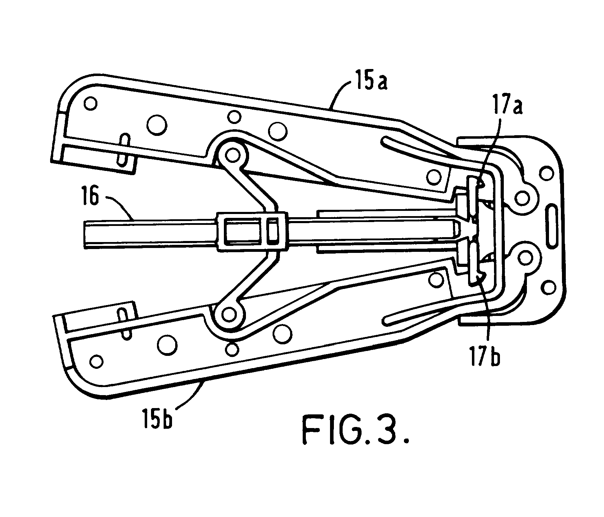

An alternative design of coating removal device is shown in Fig. 3 of the accompanying drawings and comprises two hand-held grip members 15a and 15b that are pivotally mounted at one end thereof. The other ends of the grip members 15a and 15b are movable relative to each other to and from a closed stripping position. A guide member 16a is located at the pivot end of the grip members 15a and 15b and receives therein the lead-in portion of the optical fibre 11 from which the end area of the coating layers 13 and 14 is to be stripped. Blade members 17a and 17b are located adjacent to the guide member 16 and are engageable by the grip members 15a and 15b for movement into an engaging position with the coating layers 13 and 14 during a stripping operation, wherein the blade members 17a and 17b penetrate into the coating layers 13 and 14.

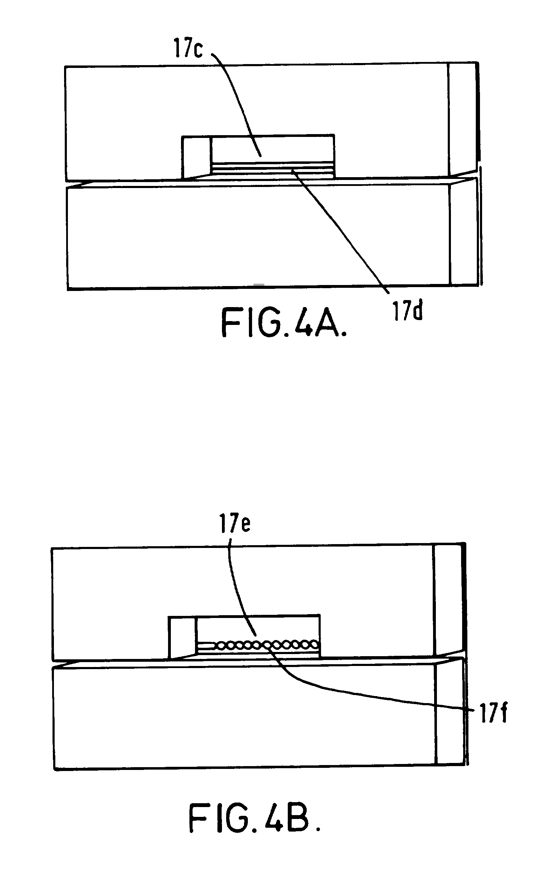

Fig. 4(A) of the accompanying drawings shows a design of blade members 17a and 17b having flat edges 17c and 17d. Alternatively, as shown in Fig. 4(B), the edges 17e and 17f may be shaped such that they follow the profile of the single or multiple cores of the optical fibre 11. Such a serrated design allows the matching blade edges to penetrate the coating layers 13, 14 and clamp closely around each of the fibre cores in the multiple optical fibre, when the device is closed.

As mentioned generally above, in order to facilitate a stripping operation, a heating member may be provided for heating the coating layers 13 and 14 to be stripped to a temperature sufficient to produce a softening thereof, whereafter a longitudinal retracting movement of the optical fibre 11 strips the coating layers 13 and 14 from the lead-in portion thereof.

In such devices it is important that the separation between the cutting edges of the coating removal blades is such that the edges penetrate deeply into the coating layers 13, 14 of the fibre 11, coming into close proximity with the core, so as to ensure that most of the coating layers 13, 14 are removed effectively as the fibre is pulled through the blades. However, the cutting edges must not be so close together that when penetrating the coating layers 13, 14 they come into contact with the core of the fibre itself, since such contact is likely to cause damage to the core 12 of the fibre 11. In particular, a microscopic crack in the fibre core 12, typically made of a brittle material such as glass, may develop if touched by the hard cutting edge of a coating removal blade. Similarly, scoring of the fibre core 12 can occur if the blade edge is in contact therewith as the fibre 11 is pulled through the blades. Such damage must be avoided, as stress applied to the fibre 11 during later handling thereof can cause fracture of the fibre 11 at the damaged region.

It is therefore essential that the separation between the cutting edges of the coating removal blades is set with great precision, but in the prior art this may only be achieved by finely adjusting the position of the blades relative to one another when installed in the device, which is a skilled and time-consuming task. Such fine adjustment must be repeated whenever replacement of worn or broken blades is required.

According to the present invention, there is provided a device for use in removing coating from coated optical fibre, comprising:
a first housing member including a first fibre-holding surface;
a second housing member including a second fibre-holding surface, the second housing member being rotatably attached to the said first housing member, so as to allow the said first and second fibre-holding surfaces to be brought together by rotation of the said housing members;
a pair of coating removal blades, one of which is removably attached to the first housing member and the other of which is removably attached to the said second housing member, for cutting a coating layer of an optical fibre positioned between the said pair of coating removal blades and held between the said first and second fibre-holding surfaces, when the said surfaces are brought together by rotation of the said housing members; and heating means, provided in one or both of the said fibre-holding surfaces, for heating the coating of an optical fibre held between the said fibre-holding surfaces, in order to aid removal of that coating;
wherein the pair of coating removal blades were manufactured as a blade unit in which the blades were held together by one or more readily-separa-ble connecting portions, the blade unit was located in and attached to each of the said housing members when the said fibre-holding surfaces were together, and the blades were separated by removal of the or each connecting portion.

Since the blades can be fabricated as a single unit, they can be easily fitted onto the device so as to have the correct relative alignment. Moreover, this simplifies the manufacture of the device and allows the blades to be replaced during use by a semi-skilled user.

During cutting of the coating layers, the fibre must be accurately aligned to the profile of the coating removal blades, if those blades have a serrated edge. This alignment must be accurate in all directions in the plane of the coating removal blade, so as to avoid the possibility of damaging the fibre core.

Accordingly, in a preferred embodiment of the present invention, the said blades have a corrugated profile and the said blade unit further comprises a fibre alignment guide portion for use in aligning an optical fibre of ribbon type with the corrugations of those blades, which guide is flexible such that when the fibre ribbon has been aligned with the blades it may be bent away from the fibre ribbon to prevent interference with the coating removal process.

Another embodiment of the present invention further comprises third and fourth housing members, including third and fourth fibre-holding surfaces respectively, releasably attached to the said first and second housing members, the third and fourth housing members being rotatably attached to each other, thereby enabling an optical fibre to be held between the said third and fourth surfaces and the said third and fourth housing members being moved relative to the said first and second housing members in a direction such that the optical fibre is pulled through the coating removal blades.

Using such a second pair of housing members, an operator of the device can grip the optical fibre firmly, thereby aiding smooth removal of the fibre coating. The two pairs of housing members may also be separated by mechanical means, for example a gas spring, instead of directly by the operator.

An embodiment of the present invention may also comprise control means for thermostatically controlling the said heating means so as to maintain a temperature in the vicinity of the coating removal blades at substantially a predetermined value.

Heated blades can penetrate the coating of the fibre more easily than unheated blades.
Thermostatically controlling the temperature of the removal blades can keep that temperature close to the optimum value required for cutting through the coating.

An embodiment of the present invention may also comprise control means for thermostatically controlling the said heating means so as to maintain a temperature in the vicinity of an optical fibre held between the said first and second surfaces at a predetermined value.

Heating the part of the optical fibre held between the first and second housing members can ease the coating removal process. However, the temperature to which the fibre and coating is heated should preferably be held close to an optimum level, and so thermostatic control can be employed to regulate this temperature.

Embodiments employing such control means may further comprise means for adjusting the said predetermined value.

Different optical fibre coating materials have different properties and, therefore, different optimum removal temperatures. For this reason, embodiments of the present invention which include heating means can also include means for changing the temperature to which the heating means are controlled.

In a device embodying the present invention one or both of the said first and second fibre-holding surfaces may be formed with a debris collection recess, located adjacent to the associated blade member, into which recess coating layer debris falls as an optical fibre is pulled longitudinally through the coating removal blades so as to remove the coating layer.

Embodiments of the present invention can usefully include such a debris collection recess to collect the removed coating and help to prevent contamination of the fibre end which is to be connected to another fibre or equipment, for example.

Reference will now be made, by way of example, to the accompanying drawings, in which:
Figs. 1(A) and 1(B) (described above) show views of one type of previously-considered coating stripper for optical fibres;
Fig. 2 (described above) shows a sectional view of a coated optical multifibre;
Fig. 3 (described above) shows a view of an alternative type of previously-considered coating stripper for optical fibres;
Figs. 4(A) and 4(B) (described above) show views of different blade designs;
Fig. 5 shows a partially cut-away front view of an embodiment of the present invention;
Fig. 6(A) shows a sectional view of the embodiment of Fig. 5 showing its principal area to an enlarged scale;
Fig. 6(B) shows an enlarged view of part of the embodiment shown in Fig. 6(A); and
Fig. 7 shows a perspective view of another embodiment of the present invention.

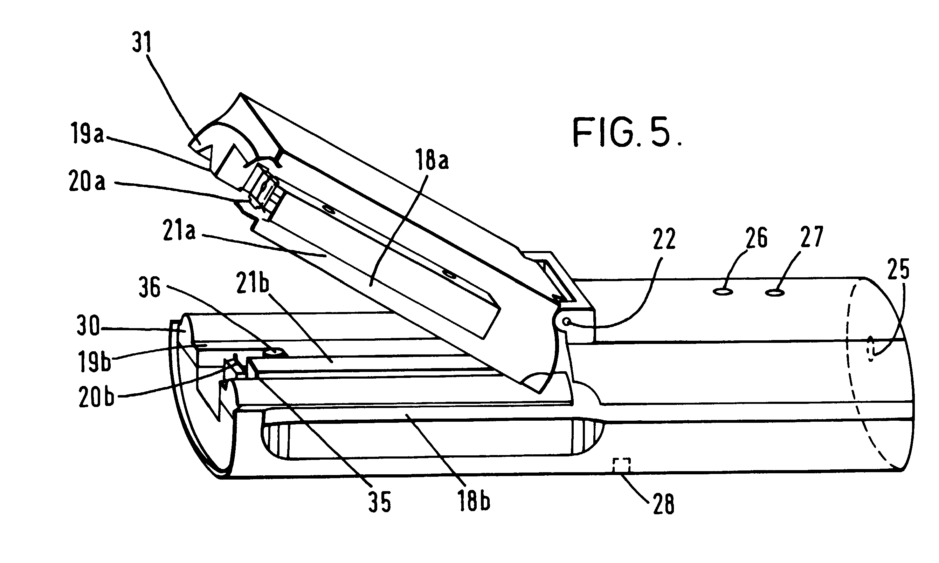

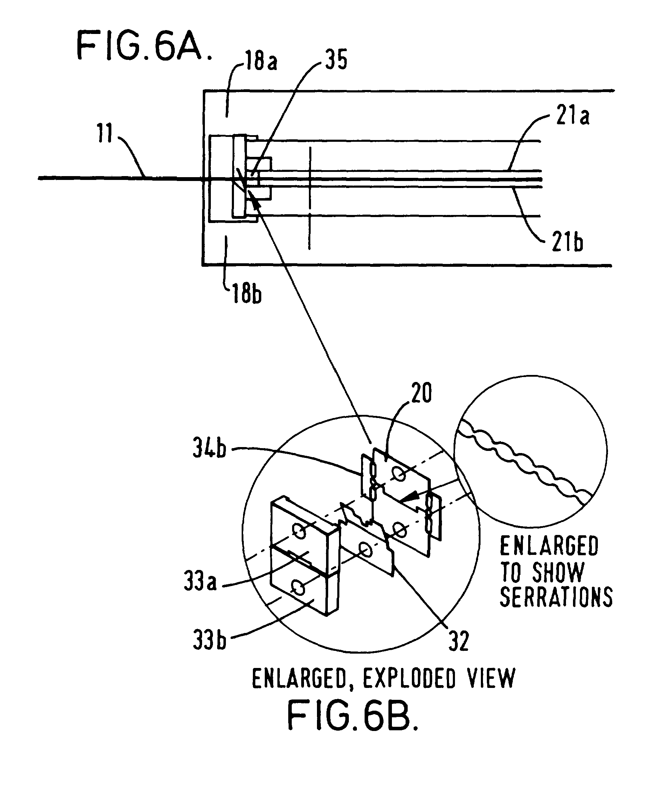

The coating remover shown in Figs. 5, 6(A) and 6 (B) has a pair of housing members 18a and 18b having respective matching surfaces 19a and 19b and carrying respective coating removal blades 20a and 20b.

The housing members 18a and 18b are rotatable relative to one another. The two housing members 18a, 18b of the present embodiment are hinged together at a rear edge 22. Alternatively they may be hinged at a lateral edge. One or more heater plates 21 a and 21 b are arranged in one or both of the said housing members 18a, 18b to heat one or both of the surfaces 19a, 19b.

An optional second pair of housing members 23a, 23b is provided which incorporate a mechanism for gripping the optical fibre 13, 14 held in an industry standard clip 24 so that it can be pulled through the said coating removal blades 20a, 20b.

Electrical power is provided to the device via a socket 25 at the rear of the lower housing member 18b. Two indicators are also provided, a coloured LED 26 which is on at all times that the device is operating and a differently coloured LED 27, which only operates when the device is at or above a temperature suitable for coating removal.

The heater plates 21 a and 21 b comprise a flat ceramic substrate onto the back of which a resistive heating element has been deposited. When a controlled current is passed through the heating tracks, the heater plates 21a, 21 b are heated to a controlled temperature, thereby heating the fibre.

A switch 28 is provided at the rear of the lower housing member 18b to enable the temperature of the heater plates 21 a and 21 b to be changed by an operator to an alternative fixed value. For example, a lower temperature can improve the performance of the device for certain fibre types where the coating layers 13 and 14 are not fully hardened and the application of excess heat has the effect of making the coating difficult to strip.

The separation between the cutting edges of the blades 20a, 20b is such that the cutting edges can penetrate the coating(s) without coming into contact with the fibre core(s). To achieve this, the pair of coating removal blades 20a and 20b are manufactured and fitted as a single unit 20. As shown in Fig. 6(B), the coating removal blade unit 20 is formed such that the blades 20a, 20b are joined together by a pair of readily-separable tabs 34a, 34b such that the cutting edges of the blades 20a, 20b are separated by the desired amount, i.e. by the distance necessary to ensure that the edges can penetrate the coating layer of an optical fibre but cannot contact its core. The coating removal blade unit 20 is fitted onto the device by screwing respective fitting plates 33a, 33b of the blade unit 20 to the upper and lower housing members 18a, 18b when the housing members 18a and 18b are closed together. The tabs 34a, 34b are then removed from the sides of the blade unit 20 so that the blade unit 20 can be separated into two parts, with the upper blade 20a attached to the upper housing member 18a and the lower blade 20b attached to the lower housing member 18b. The blade separation is therefore automatically set by the manufacturing tolerances of the slot in the blade unit 20 separating the blades 20a, 20b and no further alignment of the blades should be necessary.

The pair of housing members 18a and 18b close to the same position every time due to the attractive force of a magnet 36 in one of the housing members 18a and 18b, and due to the lateral alignment provided by the fit of a radius 30 of the lower housing member and a V-groove 31 in the upper housing member. Therefore, after the blades 20a, 20b have been separated there will be an automatic lateral alignment of those blades. Automatic lateral alignment is necessary because if serrated blades are used they must close together in the same position every time to within approximately +/-20µm to avoid the blades nicking the fibre core.

A fibre alignment guide 32 for ensuring accurate lateral alignment forming part of the blade unit 20 is provided external to the lower blade 20b. This comprises a flexible member having a slot which accepts x-way multifibre (where x is 4, 8 or 12 or any other multifibre count, as appropriate to the intended use of the device), positioned relative to the blades 20a, 20b such that a multifibre ribbon may be placed in the device in the correct lateral alignment to the serrated blades. The multifibre ribbon is placed in the external alignment guide 32 when the device is open, but as the device is closed the alignment guide 32 is bent down so as to prevent interference with the stripping process.

The pair of coating removal blades 20a and 20b and the fibre alignment guide 32 comprise metal edges, such as quenched steel edges.

The pair of housing members 18a and 18b may be made of a hard material such as metal, synthetic resin, tempered glass or ceramics, or a composite of any of these materials. An example of the synthetic resin is 30% glass-filled nylon, which will also serve to keep the outside of the stripper cool to the touch.

An operation for removing coating from an optical fibre using an embodiment of the present invention will be described in more detail below.

Firstly, the device is turned on such that the heater plates 21 a, 21 b are activated. When the plates 21 a, 21 b have reached the desired temperature, as set by the switch 28 and indicated by the LED 27, one of the housing members 18a or 18b is rotated relative to the other in order to separate the pair of blades 20a, 20b from one another as well as separating the surfaces 19a, 19b. The end of an optical fibre 11 to be stripped is then placed on the cutting edge of the lower blade 20b and the heater plate 21 b and aligned to the profile of the cutting edge by locating it using the fibre alignment guide 32. Thereafter, the upper (or lower) housing member 18a (18b) is moved back to close together the pair of blades 20a, 20b and also the heater plates 21 a, 21 b. As the cutting edges of the blades 20a, 20b close together, they cut into the coating layers 13, 14 which have been softened through heating by the heater plates 21 a, 21 b. The coated optical fibre is then pulled in a longitudinal direction such as to remove the end of the fibre 11 from the device. As the fibre is pulled, the coating layers 13, 14 split along the crack or indentation therein made by the cutting edges, and the relative motion of the coating layers 13, 14 and the blades 20a, 20b causes the coating to crumble away from the optical fibre core. The removed coating is allowed to collect in a debris collection area 35 located on the inside of the device adjacent to the lower blade 20b and the lower heater plate 21 b.

Since the heating means incorporated within the housing members of the device can be temperature regulated they can heat the coating of the optical fibre to the appropriate temperature for ideal stripping.

Different coated optical fibre produced by different manufacturers have different stripping characteristics and some coatings are very difficult to remove if inappropriate temperatures are used. If too low a temperature is used removal can be very difficult, whereas if too high a temperature is used the adhesion between the coating layers and the core of the optical fibre can be strengthened rather than loosened. Therefore, temperature control allows the device to operate at different temperatures chosen to produce optimal stripping for a wide range of coated fibres.

A wide range of d.c. voltages can be used to power the heater elements, because these elements can be regulated so that the current flowing through them is independent of the supply voltage.

For example, powering the device from a battery may lead to gradual discharge of that battery, leading to a reduction in the supply voltage. If the heater control circuit can regulate the current, using, for example, a controllable inductive load, the electrical circuit can partially compensate for the reduction in supply voltage so that the power dissipated in the heater elements can be maintained at a desired level.

In an alternative embodiment, the heater means 21 a and 21 b are located, in the housing members, so as to heat the pair of coating removal blades.

Since the coating removal blades are heated they can penetrate the coating layers very easily. Thus the blades cut through the coating very easily and the device is more effective in removing all of the coating layers. In addition, the end of the coating after stripping is neat and tidy making the stripped fibre suitable for use in optical connectors.

The coated optical fibre may be pulled in the desired direction using a means of assistance, which may be mechanical, electrical or otherwise.

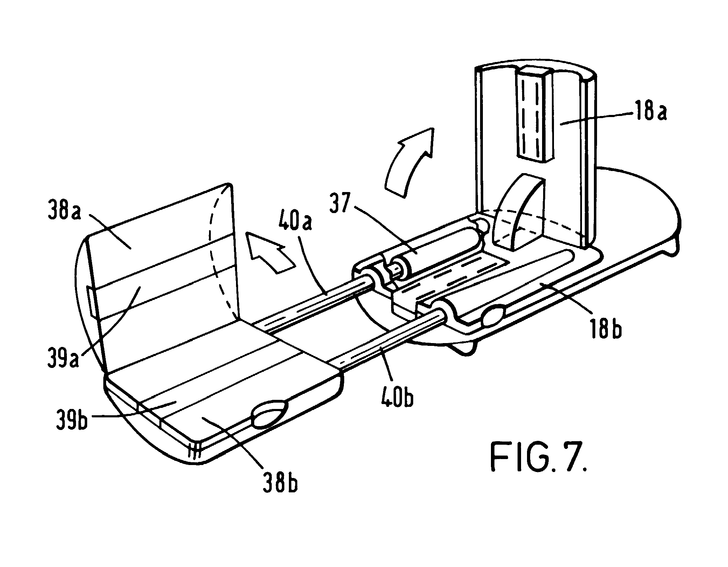

One such means of assistance comprises a gas spring. As shown in Fig. 7, the lower of the two housing members 18a, 18b of the coating remover is provided with a gas spring 37. A second pair of pivotally-connect-ed housing members 38a, 38b are provided, which have respective clamping surfaces 39a, 39b for gripping part of the optical fibre. The second pair of housing members 38a, 38b are connected to the first pair of housing members 18a, 18b by a pair of retractable rods 40a, 40b (shown in an extended disposition in Fig. 7), one of which rods 40a is connected to one end of the gas spring 37. When the gas spring 37 is compressed, the rods being in a retracted disposition such that the two pairs of housing members 18a, 18b and 38a, 38b are adjacent to one another, the end of the fibre to be stripped is clamped in the first pair of housing members 18a, 18b, and another part of the fibre is clamped in the second pair of housing members 38a, 38b. The gas spring 37 is then released and as it extends under its own internal pressure, so extending the rod 40a and consequently also the rod 40b, the two pairs of housing members are separated, thereby providing the force necessary to strip the optical fibre 11. This force is smooth, consistent and operator-independent, leading to controlled removal of fibre coating and thereby minimising the likelihood of damaging the core(s) of the optical fibre as it is drawn through the blades 20a, 20b and also increasing the reliability of the removal procedure. In this way, damage likely to give rise to weakened or broken fibres, and hence failed optical connectors, can be avoided.

In some circumstances, it may be desirable to employ a second pair of housing members, such as those shown in Fig. 7, for clamping part of the fibre even if a gas spring is not used to separate the two pairs of housing members, since such a second pair of housing members would provide a means of gripping the fibre firmly as it is pulled through the blades 20a, 20b.

Using a device embodying the present invention, coating was satisfactorily stripped from a ribbon-type coated optical fibre 11 comprising twelve separate optical fibres 12 arranged in parallel between a pair of sticky backing-sheets 14 to maintain the fibres 12 in a ribbon configuration having a width of 3.0mm and a thickness of 0.30mm.

Each of the optical fibres 12, having an outer diameter of 125µm, had a quartz-type core surrounded by an inner coating layer 13 which was made of acrylate.

The device used had blades 20a, 20b which were manufactured as a single unit 20 with a blade separation or clearance of 140µm and then separated by breaking off the manufacturing tabs 34a, 34b. The heating temperature of the heating plates 21a, 21b was set to 95°C.

The exposed outer periphery of the optical fibres 12 and the cut end of the coating layer 13 and the layer 14 showed a neat and excellent appearance. Any remaining debris of the stripped coating layers not collected in the debris collection area 35 was easily removed with a single wipe of an alcohol-soaked tissue. In addition, none of the fibres were damaged by the stripping process.

## Claims

1. A device for use in removing coating (13, 14) from coated optical fibre, comprising :
a first housing member (18a) including a first fibre-holding surface (19a);
a second housing member (18b) including a second fibre-holding surface (19b), the second housing member being rotatably attached to the said first housing member, so as to allow the said first and second fibre-holding surfaces to be brought together by rotation of the said housing members;
a pair of coating removal blades (20a, 20b), one of which is removably attached to the first housing member (18a) and the other of which is removably attached to the said second housing member (18b), for cutting a coating layer (13, 14) of an optical fibre positioned between the said pair of coating removal blades (20a, 20b) and held between the said first and second fibre-holding surfaces, when the said surfaces are brought together by rotation of the said housing members; and
heating means (21 a, 21 b), provided in one or both of the said fibre-holding surfaces, for heating the coating of an optical fibre held between the said fibre-holding surfaces, in order to aid removal of that coating;
wherein the pair of coating removal blades were manufactured as a blade unit (20) in which the blades were held together by one or more readily-separable connecting portions (34a, 34b), the blade unit (20) was located in and attached to each of the said housing members when the said fibre-holding surfaces were together, and the blades were separated by removal of the or each connecting portion.

2. A device as claimed in claim 1, wherein the said blades have a corrugated profile and the said blade unit further comprises a fibre alignment guide portion (32) for use in aligning an optical fibre of ribbon type with the corrugations of those blades, which guide is flexible such that when the fibre ribbon has been aligned with the blades it may be bent away from the fibre ribbon to prevent interference with the coating removal process.

3. A device as claimed in any preceding claim, wherein the device further comprises third and fourth housing members (38a, 38b), including third and fourth fibre-holding surfaces (39a, 39b) respectively, releasably attached to the said first and second housing members, the third and fourth housing members being rotatably attached to each other, thereby enabling an optical fibre to be held between the said third and fourth surfaces and the said third and fourth housing members to be moved relative to the said first and second housing members in a direction such that the optical fibre is pulled through the coating removal blades.

4. A device as claimed in any preceding claim, further comprising control means for thermostatically controlling the said heating means (21 a, 21 b) so as to maintain a temperature in the vicinity of the coating removal blades at substantially a predetermined value.

5. A device as claimed in claim 4, further comprising means for adjusting the said predetermined value.

6. A device as claimed in any preceding claim, wherein one or both of the said first and second fibre-holding surfaces is formed with a debris collection recess (35), located adjacent to the associated blade member, into which recess coating layer debris falls as an optical fibre is pulled longitudinally through the coating removal blades so as to remove the coating layer.
